# EUROPEAN PATENT APPLICATION

(11) **EP 3 403 861 A1**
(43) Date of publication of application: **21.11.2018**
(21) Application number: 17172065.9
(22) Date of filing: 19.05.2017
(51) Int. Cl.: B60J 9/04, B60J 10/242

(54) **DOOR DEVICE WITH AN AIR CURTAIN**

(71) Applicant: VOLKSWAGEN AKTIENGESELLSCHAFT, 38440 Wolfsburg (DE); Scania CV AB, 151 87 Södertälje (SE)
(72) Inventor: SUE, Armin, 38527 Meine (DE); SJÖDIN, Robert, 61144 Nyköping (SE)
(74) Representative: Gulde & Partner

(57) **Abstract**

The invention relates to a door device (100) with at least one door (10) having a sealing (10-1) which seals a doorway (200) in a closed position (1) of the door (10), and the doorway (200) is provided with an air curtain (300) active outside the closed position (1) of the door (10).

It is provided the sealing (10-1) has at least one air outlet opening for blowing out compressed air and at least one air inlet opening for supplying compressed air, wherein the at least one air outlet opening having an air curtain (300H, 300H'; 300R) in the doorway (200) while the compressed air supply is active.

## Description

The invention relates to a door device with at least one door which has a sealing and which seals a doorway in a closed position of the door, whereby the doorway is provided with an air curtain, which is active outside the closed position of the door.

The invention involves a method and a device to keep the heat (winter time) or cold (summer time) air in a bus when the doors are opened to let passengers in and out of the vehicle.

It is becoming more common with heavy vehicles that have part or whole drivetrain electrified. When it comes to battery electric vehicles (BEV) there is a difficulty in having a good range of the vehicles due to the weight of the batteries. The amount of energy required to heat up a bus in the passenger area requires much added weight in batteries as compared to an ordinary diesel bus. The main problem is that a lot of energy is lost every time a bus door is opened and for a BEV a lot of battery weight needs to be added and that means that fewer passengers could travel with the bus.

The document CN 104648086 B describes an energy-saving door structure for a city bus. The energy-saving door structure comprises a vehicle door frame structure including two vertical components equipped with embedded air spray nozzles; two vehicle door components connected to a suspension arm in a rotary manner; air curtain rods arranged on the vehicle door components and face a passenger compartment of the bus; and an air guide pipe for providing compressed air entering the air spray nozzles embedded in the door frame and the air curtain rods. According to the invention, by embedding the improved air curtain producing tools in the vehicle door, air in the vehicle can be kept when passengers get on or off the bus, so that energy is saved, an air condition system of the urban bus can work in a more efficient and low energy-consumption state and a comfortable temperature of the passenger compartment can be kept at the same time.

The document US 2004/0242146 A1 pertains to a sliding door device comprising a least one movable sliding door and boundary parts for holding and guiding the movable sliding door, which device opens and/or closes a doorway under the command of a control unit, where at least certain edges of the sliding door are enclosed by frame parts; where a blower is able to produce an air curtain, which emerges through a longitudinal opening and passes in front of the doorway; and where the air curtain flows out from an opening in the frame part, which opening extends over nearly the entire length of the vertical edge of the door, the frame part being mounted on the exposed vertical edge of the sliding door.

The document US 3 527 152 A refers to a passenger vehicle having a roof comprising overhead duct with vents formed in said roof and arranged to distribute air for the heating and ventilation of a passenger compartment in the vehicle from the overhead duct vents, a doorway in said vehicle having a duct with vents connected to receive air from said overhead duct and to form a curtain of air in motion across said doorway during such time as the door is open, and a door in said doorway carrying a seal along a top edge thereof and disposed to seal said vent when the said door is closed.

The document US 2006/0160484 A1 relates to a door device with at least one door, for opening and closing a passageway. The doors may be displaced in a door frame, for example, by means of a rotational or longitudinal displaceable mounting. The door device is further provided with at least one air curtain device, essentially running along the complete height of the passageway and which generates an exiting air curtain, such that, with the door open, the passageway is screened by the air curtain. The generated air curtain serves to reduce the energy losses which occur when air from the outside of the door device reaches the inside of the door device or vice versa. A door device may be achieved which not only permits the access of people and objects, but also identification of the people, objects, or similar and the management thereof is as uncomplicated as possible, whereby the door device is provided with at least one additional identification system. Said identification system comprises at least one sensor unit, a control unit and an output unit which are connected to each other. Furthermore, at least one sensor unit in the identification system is integrated in the air curtain device.

The object of the invention is to improve an air curtain system for a door construction. The invention involves a method to keep the heat (winter time) or cold (summer time) air in a bus when the doors are opened to let passengers in and out of the vehicle.

The basis of the invention is a door device with at least one door which has a sealing and which seals a doorway in a closed position of the door, whereby the doorway is provided with an air curtain, which is active outside the closed position of the door.

According to the invention, the sealing has at least one air outlet opening for blowing out compressed air and at least one air inlet opening for supplying compressed air, wherein the at least one air outlet opening forms an air curtain in the doorway by blowing out the compressed air while the compressed air supply is active.

Preferably, it is provided that the air outlet opening of the sealing is arranged in the sealing region of a sealing which seals the doorway opposite a counterpart so that the at least one air outlet opening for the blowing out of compressed air is released automatically only after leaving the closed position of the at least one door.

In principle, the seal could also have an air outlet opening which is arranged outside the sealing region. In this case, the air outlet opening for blowing out compressed air is always released so that the features according to the invention take effect even without the door has to leave the closed position.

However, the arrangement of the air outlet opening of the sealing in the sealing region is particularly suitable since the compressed air blows out exactly into the doorway-plane. In addition, a conventional sealing must additionally have only the necessary air inlet opening and air outlet opening without the need to significantly change the sealing profile of the conventional seal.

Preferably, at least one air supply element, in particular an upper air supply element and a lower air supply element, are assigned to the at least one door. The air supply element has at least one air outlet opening for blowing out compressed air and at least one air inlet opening for supplying compressed air. The at least one air outlet opening forms a vertical air curtain in the doorway by blowing out the compressed air while the compressed air supply is active.

Further preferably, the at least one air outlet opening of the sealing blows out horizontally into the doorway-plane of the doorway through formation of at least one air nozzle horizontally formed in the sealing, by which a horizontally blowing air curtain is advantageously formed in the doorway-plane of the doorway.

Alternatively, it is preferably provided that the at least one air outlet opening of the sealing blows out obliquely into the doorway-plane through formation of at least one air nozzle in the sealing, which is tilted relative to an imaginary horizontal axis by a predeterminable outlet angle, by which an obliquely blowing air curtain is advantageously formed within the doorway-plane.

It is also preferably provided that the at least one air outlet opening of the air supply element blows out vertically into the doorway-plane through formation of at least one air nozzle vertically formed in the air supply element, by which a vertically blowing air curtain is advantageously formed within the doorway-plane.

Alternatively, it is preferably provided that the at least one air outlet opening of the air supply element blows out relative to the vertical obliquely into the doorway-plane of the doorway through formation of at least one air nozzle in the air supply element, which is tilted relative to an imaginary vertical axis by a predeterminable outlet angle, by which a relative to the vertical obliquely blowing air curtain is formed within the doorway-plane of the doorway.

The upper and/or lower air nozzles in the air supply element are either arranged tilted from the front or are arranged adjustable to be tilted relative to the imaginary vertical axis.

Alternatively, it is preferably provided that the at least one air outlet opening of the air supply element blows out obliquely relative to the vertical from the doorway-plane through the formation of at least one air nozzle, which is tilted in the air supply element relative to an imaginary vertical axis by a predeterminable outlet angle, by which an -inwards or outwards relative to the doorway-plane obliquely relative to the vertical-blowing air curtain is formed..

In this alternative embodiment, the air nozzles are adjustable so that they can be tilted sideways relative to the imaginary vertical axis within the doorway-plane or can be tilted obliquely - inwards or outwards - relative to the doorway-plane.

By tilting the air nozzles relative to the vertical obliquely -inwards or outwards- the respective air curtain can be switched from a summer mode to a winter mode, as will be explained in the following.

A door device with an air curtain within the doorway-plane which blows straight out relative to the horizontal and an air curtain in summer mode which blows out at least partly obliquely to the outside relative to the vertical on the upper side of the doorway-plane and blows out at least partly to the inside relative to the vertical on the lower side of the doorway-plane, by which in summer, the warm air on the upper side of the doorway-plane can not flow in (into an interior) and the cold air on the lower side of the doorway-plane can not flow out (from an interior).

A door device with an air curtain within the doorway-plane which blows straight out relative to the horizontal and an air curtain in winter mode which blows out at least partly obliquely to the inside relative to the vertical on the upper side of the doorway-plane and blows out at least partly to the outside relative to the vertical on the lower side of the doorway-plane, by which in winter, the warm air on the upper side of the doorway-plane can not flow out (from an interior) and the cold air on the lower side of the doorway-plane can not flow in (into an interior).

In advantageous combinations, it is provided that the respective horizontal air curtain and the respective vertical air curtain are effective together, by which an energy-saving air curtain, which blows out in a cross-flow, is formed within the doorway-plane or outside the doorway-plane.

Further energy-saving combinations of air curtains which form at least one rotating flow through the generated flow direction are provided as follows:
A door device with a within the doorway-plane relative to the horizontal at least partly obliquely blowing air curtain and a a within the doorway-plane relative to the vertical straight blowing air curtain.

A door device with a within the doorway-plane relative to the horizontal at least partly obliquely blowing air curtain and a a within the doorway-plane relative to the horizontal straight blowing air curtain.

A door device with a relative to the horizontal within the doorway-plane at least partly obliquely blowing air curtain with a relative to the vertical within the doorway-plane at least partly obliquely blowing air curtain.

A door device with a relative to the horizontal within the doorway-plane at least partly obliquely blowing air curtain and an in summer mode on the upper side of the doorway-plane with a relative to the vertical at least partly obliquely outward-blowing and on the lower side of the doorway-plane with a relative to the vertical at least partly obliquely inward-blowing air curtain, by which in summer, the warm air on the upper side of the doorway-plane can not flow in (into an interior) and the cold air on the lower side of the doorway-plane can not flow out (from an interior).

A door device with a relative to the horizontal within the doorway-plane straight or at least partly obliquely blowing air curtain and an in winter mode on the upper side of the doorway-plane with a relative to the vertical at least partly obliquely inward-blowing and on the lower side of the doorway-plane with a relative to the vertical at least partly obliquely outward-blowing air curtain, by which in winter, the warm air on the upper side of the doorway-plane can not flow out (from an interior) and the cold air on the lower side of the doorway-plane can not flow in (into an interior).

A sliding door according to the invention with two sliding doors (sliding door leaves) is designed as follows according to the invention:
Each of the sliding doors comprises a sealing and each having at least one air outlet opening for blowing out compressed air and at least one air inlet opening for supplying compressed air.

The air outlet openings form an air curtain in the doorway between the sliding doors by blowing out the compressed air while the compressed air supply is active.

The air outlet openings of the sealings are arranged in the sealing region of the sealings which seal the doorway between the sliding doors.

The air outlet openings for blowing out compressed air are only released automatically after leaving the closed position of the sliding doors.

To the sliding doors are assigned at least one air supply element, in particular an upper and a lower air supply element, which likewise has at least one air outlet opening for blowing out compressed air and at least one air inlet opening for supplying compressed air, wherein the at least one air outlet form an air curtain within the doorway-plane or outside the doorway-plane by blowing out the compressed air while the compressed air supply is active.

In principle, the invention relates to following method:
A method of operating a door device in which the sliding doors are brought from a closed position into a first partial open position and then a complete open position. In this case, it is provided that a relative to a horizontal straight blowing air curtain or a relative to a horizontal at least partly inclined blowing air curtain within the doorway-plane is activated after the sliding doors have left the closed position. A relative to a vertical straight blowing air curtain or a relative to a vertical at least partly inclined blowing air curtain within or outside the doorway-plane is only activated after the sliding doors have reached the first partial open position.

The method is further characterized in that, after reaching the first partial open position in the doorway between the sliding doors, an air curtain which blows out in a cross-flow forms an air curtain which blows out in a rotational flow.

Several exemplary embodiments oft the object oft the invention are illustrated in the drawing:

### Brief Description of the Figures:

- FIG. 1: shows a door device in a closed position 1;
- FIG. 2: shows the door device in a first partial open position 2a with a horizontal air curtain;
- FIG. 3: shows the door device in a second partial open position 2b with an air curtain in a possible embodiment (cross-flow);
- FIG. 4: shows the door device in the second partial open position 2b with an air curtain in another possible embodiment (rotational flow).

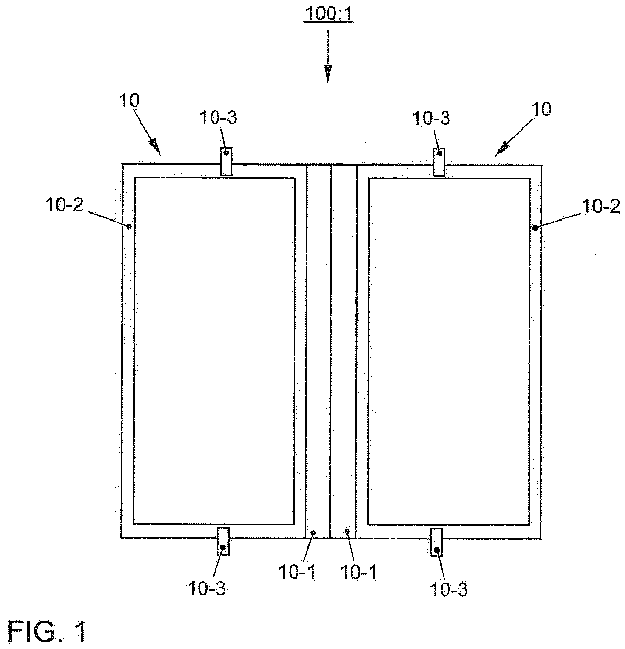

FIG. 1 shows a door device 100 in a closed position 1.

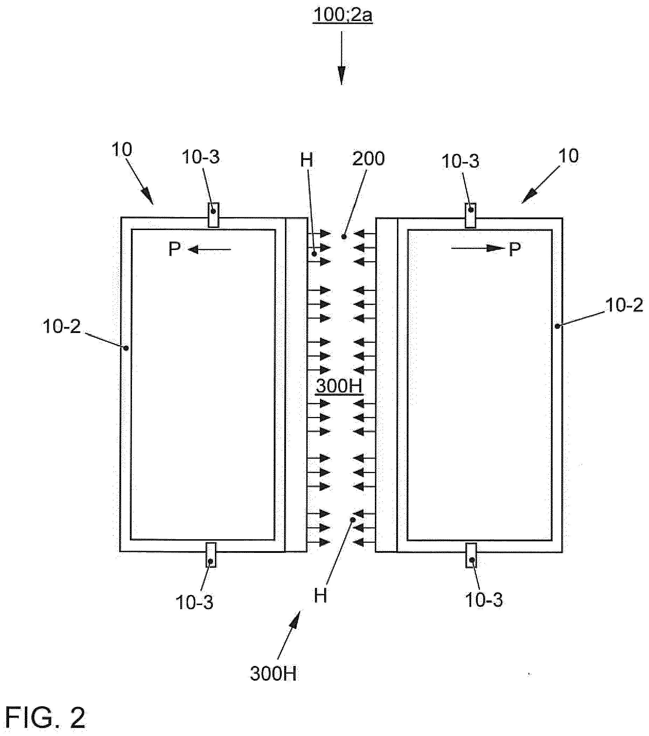

The door device 100 comprises at least one door 10 which is provided for opening and closing a doorway 200 (see FIGS. 2 to 4).

In the following exemplary embodiments, the door device 100 comprises two doors 10, which are designed as sliding doors.

The sliding doors 10 each have a sealing 10-1 on their side directed towards the doorway 200. In the exemplary embodiment, the sealings 10-1 are each fixed to a door frame 10-2. In the closed position 1 according to FIG. 1, the sealings 10-1 ensure that the doorway 200 is sealed between the sliding doors 10.

The sealing of the doorway 200 takes place via the respective front face of the sealings 10-1 facing the opposing sliding door 10.

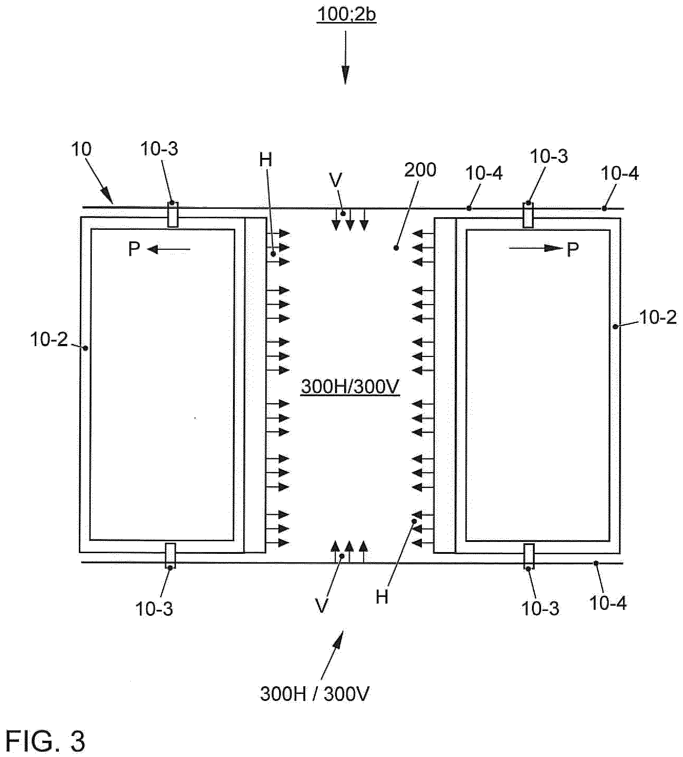

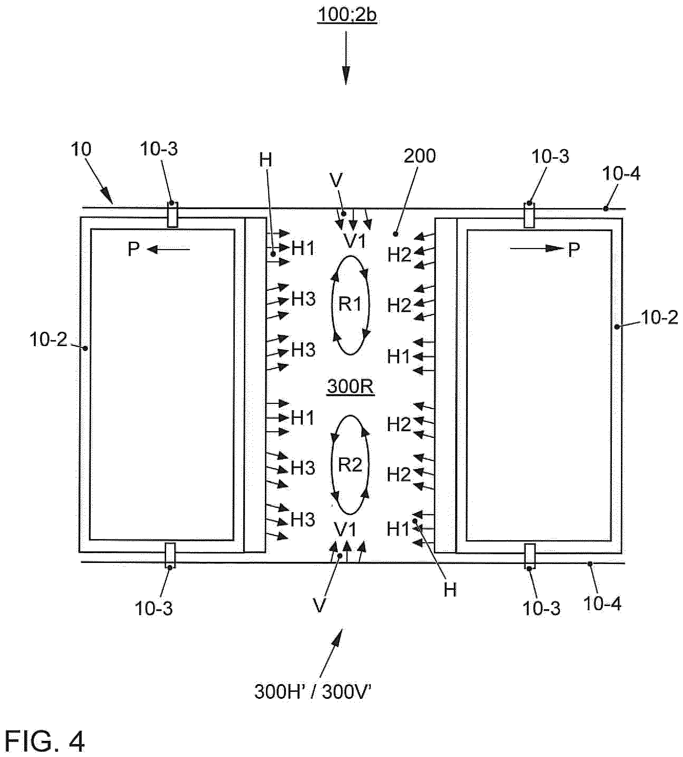

The sliding doors 10 comprise door-fixed guide elements 10-3, which (as shown in FIGS. 3 and 4) are movably arranged on car-body-fixed stationary holding elements 10-4, so that the sliding doors 10 are displaceable by means of the guiding elements 10-3 towards the holding elements 10-4 from closed position 1 to their full open position (not shown).

The horizontal air curtain 300H, 300H':
FIG. 2 shows the door device 100 in a first partial open position 2a with a horizontal air curtain 300H according to a first preferred embodiment.

According to the direction arrows P shown in the sliding doors 10, the sliding doors 10 open in the opposite direction so that the doorway 200 forms between them. The door-fixed guiding elements 10-3 are displaced outwardly relative to the stationary holding elements 10-4.

According to the invention, on the respective front face of the sealing 10-1 directed towards the opposite sliding door 10, at least one, preferably several, openings (air outlet opening) are arranged in the sealing 10-1, which serve as an air outlet or as air outlets. The opening or the openings is/are indicated by the air outlet arrows H directed towards the doorway 200.

FIG. 2 shows that the air curtain 300 is formed in the plane between the front faces of the sealings 10-1 or in the doorway-plane of the doorway 200 between the opening sliding doors 10, which is characterized by a horizontal air flow and thus is formed as a horizontal air curtain 300H.

The sealings 10-1 have, in their interior, at least one cavity, to which compressed air is supplied in a required volume flow with a predeterminable pressure by means of at least one blower (not shown), wherein it is ensured that the compressed air is uniformly distributed over the openings (air outlet openings) indicated by air outlet arrows L.

A separate blower can be assigned to each sliding door 10 or the respective associated sealing 10-1. The sealings 10-1 of both sliding doors 10 are preferably supplied by a central blower.

It is provided that the compressed air supply is activated and the horizontal air curtain 300H is formed as soon as the sliding doors 10 open or the door device 100 leaves its closed position 1.

It is possible to form exclusively this horizontal air curtain 300H, so that the door device 100 in its open position, which is not shown in detail, has only this horizontal air curtain 300H, by what the energy losses due to the barrier effect of the horizontal air curtain 300H will already be minimized.

Thus, the at least one air outlet opening of the sealing 10-1 - by forming at least one air nozzle horizontally formed in the sealing 10-1 - blows horizontally out of the sealing surface of the sealing into the doorway 200, thereby forming a horizontally blowing air curtain 300H in the doorway 200.

Alternatively, the at least one air outlet opening of the sealing 10-1 blows out in an oblique direction from the sealing surface of the sealing into the doorway 200 - by forming at least one air nozzle, which is tilted in the sealing 10-1 relative to an imaginary horizontal axis within the doorway-plane by a predeterminable outlet angle, by what an obliquely blowing air curtain 300H' is formed in the doorway 200 (see FIG. 4).

The combined horizontal and vertical air curtain 300H/300V:
As mentioned above, the aim of the invention is to keep the energy losses generated by an opened door device 100 as small as possible, so that according to the invention it is provided to combine the horizontal air curtain 300H, 300H' with a vertical air curtain 300V, 300V' as follows.

In one embodiment, the horizontal air curtain 300H is combined with the vertical air curtain 300V as soon as the sliding doors 10 have reached the first partial open position 2a. In other words, the vertical air curtain 300V is preferably actively switched on as soon as the first partial open position 2a is reached. It goes without saying that the vertical air curtain 300V can in principle be actively switched on in parallel with the horizontal air curtain 300H as soon as the sliding doors 10 open and the sliding doors 10 leave the closed position 1.

A second partial open position 2a of the sliding doors 10 is shown in FIG. 3. In other words, as soon as the sliding doors 10 have reached the first partial open position 2a according to FIG. 2 and open further towards the full open position, the vertical air curtain 300V is actively switched on in combination with the horizontal air curtain 300H.

In other words, when the first partial open position 2a is reached, the vertical air curtain 300V is actively switched on and interacts with the horizontal air curtain 300H in combination in each direction of the subsequent openings up to the fully open position. Thus, the second partial open position 2b represents only one exemplary position of the sliding doors 10 with a combined air curtain 300H/300V.

Preferably it is provided that at least one further opening or several openings (air outlet opening/openings), which serve as an air outlet or as air outlets, are arranged vertically facing downwards and/or vertically facing upwards the doorway-plane, which is already been formed by the horizontal air curtain 300H (as mentioned above). The opening or the openings are indicated by the air outlet arrows V directed towards the doorway 200.

Due to combination of the horizontal air curtain 300H with the vertical air curtain 300V, the barrier effect (in the sense of preventing air exchange between the vehicle interior and the environment) of the combined air curtain 300H/300V is significantly improved. In winter warm air can escape less easily from the vehicle. By analogy, cool air can escape less easily in the summer, so that energy is saved. Thus, less energy has to be fed into the vehicle interior for the purpose of heating or cooling, for example by stored energy in electric batteries.

The vertical air curtain 300V comprises, according to the invention, air supply elements with corresponding vertically downwardly directed and vertically upwardly directed openings (air outlet openings) arranged in the upper region and/or in the lower region in the doorway-plane, so that the vertical air curtain 300V can be formed.

In the illustrated exemplary embodiment (see FIGS. 3 and 4), the air supply elements according to the invention are designed simultaneously as the stationary holding elements 10-4. In other words, the holding elements 10-4 have at least one cavity in the region of the at least one air outlet opening, to which compressed air is supplied in a required volume flow at a predeterminable pressure by means of a blower (not shown in detail), wherein compressed air is uniformly distributed over the air outlet openings indicated by the air outlet arrows V.

For the compressed air supply of the vertical air curtain 300V, which has the upper air curtain and/or the lower air curtain, a separate blower can be assigned to the upper and lower air curtain. Preferably the vertical air curtain is supplied by a central blower.

According to the invention, it is provided that both the horizontal air curtain 300H and the vertical air curtain 300V are supplied with compressed air by a single blower, so that advantageously a small number of components for the compressed air supply is required. It goes without saying that corresponding compressed air supply lines (not shown) are provided which supply the sealings 10-1 and/or the air supply elements 10-4 with compressed air.

Thus, the at least one air outlet opening of the air supply elements 10-4 - by forming at least one air nozzle vertically formed in the air supply elements 10 - 4 - blows vertically out into the doorway-plane of the doorway 200, by that a vertically blowing air curtain 300V is formed in the doorway 200, which can be combined with one of the horizontal air curtains 300H, 300H'.

Alternatively, the at least one air outlet opening of the air supply elements 10-4 blows vertically obliquely into the doorway 200 within the doorway-plane through formation of at least one air nozzle, which is tilted in the air supply element 10-4 by a predeterminable outlet angle, which results in the formation of an obliquely blowing vertical air curtain 300V', which can be combined with one of the horizontal air curtains 300H, 300H'.

If a relative to the horizontal obliquely blowing air curtain 300H' and a relative to the vertical straight blowing air curtain 300V are combined or a relative to the vertical obliquely blowing vertical air curtain 300V' and a relative to the horizontal obliquely blowing air curtain 300H are combined or a relative to the horizontal obliquely blowing air curtain 300H' and a relative to the vertical obliquely blowing vertical air curtain 300V' are combined, a rotational flow 300R is generated in the doorway 200, as will be explained below.

### The vertical air curtain 300H:

The relative to the vertical straight blowing air curtain 300H or the relative to the vertical obliquely blowing vertical air curtain 300V' can be formed and operated without the horizontal air curtain 300H, 300H'.

### The rotating air curtain 300R:

If in the doorway 200 an obliquely blowing horizontal air curtain 300H' is formed with the vertically blowing air curtain 300V or the obliquely blowing vertical air curtain 300V' is formed with the horizontally blowing air curtain 300H or the obliquely blowing horizontal air curtain 300H' is formed with the obliquely blowing vertical air curtain 300V', at least one air curtain 300R which blows out in a rotational flow forms in the doorway-plane of the doorway 200.

In the following exemplary embodiment, the at least partly obliquely blowing horizontal air curtain 300H' is combined with the at least partly obliquely blowing vertical air curtain 300V'.

FIG. 4 shows the door device 100 in the second partial open position 2b according to a second preferred exemplary embodiment.

The sliding doors 10 in FIG. 4 are located in the same position as in FIG. 3.

The rotating air curtain 300R is a variation of the combined horizontal and vertical air curtain 300H/300V.

It is provided that initially the compressed air supply is actively switched on and the at least partly obliquely blowing horizontal air curtain 300H is formed as soon as the sliding doors 10 open or the door device 100 leaves its closed position 1. It goes without saying that the vertically at least obliquely blowing air curtain 300V' can in principle be actively switched on in parallel with the horizontally at least obliquely blowing air curtain 300H', in particular as soon as the sliding doors 10 open and leave the closed position 1.

In contrast to the exemplary embodiment according to FIG. 3, an air curtain 300R is generated in the doorway-plane of the doorway 200, wherein the flow of which rotates within the doorway-plane of the doorway 200, as illustrated by the arrows of rotation R within the doorway 200.

In detail, in the doorway-plane of the doorway 200, as will be explained below, a rotating air curtain 300R is formed as follows.

The rotation of the flow to form the rotating air curtain 300R in the doorway-plane is created by assigning corresponding outlet angles to the at least some air outlet openings in the sealings 10-1 and the at least some air supply elements 10-4 within the doorway-plane, which form at least one rotating flow within the doorway-doorway-plane 200.

Preferably, the rotating air curtain 300R is formed as soon as the sliding doors 10 move from the first partial open position 2a further towards the second partial open position and then to the full open position.

In other words, the vertical air curtain 300V' is preferably only switched on when the sliding doors are in the first partial open position 2a, since the rotation can now be constantly formed in the doorway-plane of the doorway 200, because the opening/s of the air curtain 300V' become free and in effect only at a predeterminable first partial open position.

The rotation is caused by forming the air outlet openings in the air supply elements 10-4 of the vertical air curtain 300V and in the sealings 10-1 of the horizontal air curtain 300H with a predeterminable outlet angle.

It has been found that, preferably by the selection of the predeterminable outlet angles, at least one, preferably two, swivels R1, R2 or a plurality of svivels Rn (n = 1, 2, 3, ...) are formed which amplify the barrier effect of the rotating air curtain 300R.

In other words, the combination of a horizontally blowing air curtain 300H with a vertically blowing air curtain 300V already improves the air curtain's barrier effect compared to conventional air curtains.

If it is ensured that this combined air curtain 300H, 300V is set in rotation, the barrier effect is further improved by the rotating air curtain 300R formed in this way. By forming more than one, in particular two swivels R1 and R2 or a plurality of svivels Rn (n > 1) within the rotating air curtain 300R, it has been found that the barrier effect is further amplified compared to a rotating air curtain 300R with only one swivel Rn (n = 1).

The displayed two swivels R1 and R2 (n = 2) are formed in particular by two air outlet areas H1, H2 having at least one horizontally oriented air outlet opening being arranged diagonally to one another in the upper half of the doorway-plane. The outlet angle is within the doorway-plane and does not deviate from an imaginary horizontal axis.

Via the sealings 10-1, further air outlet areas H2, H3 arranged diagonally to one another in the opposite sliding doors 10 are arranged within the upper half of the doorway-plane, whose at least one air outlet opening respectively opposing the outlet angle, preferably form an alternate angle relative to the horizontal axis within the doorway-plane, correspondingly aligned, so that a clockwise rotating swivel R1 is formed.

The rotation of the swivel R1 in clockwise direction and its barrier effect is caused or amplified by an air outlet area V1, whose at least one air outlet opening is aligned with respect to the outlet angle so that the clockwise rotating flow of the air outlet areas H2, H3 is stimulated or supported. The outlet angle of the air outlet region V1 deviates within the doorway-plane relative to an imaginary vertical axis by a predeterminable difference angle.

The lower swivel R2 in the lower half of the door passage plane is formed analogously, as is illustrated by the reference symbols used analogously, but the clockwise direction is preferably changed, so that the svivels R1 and R2 do not mutually weaken each other in the zone in which they mutually influence or interact.

Note that not only BEV buses may benefit from this solution with air curtains. It could also be used for buses with any type of drive train. They will also gain better comfort for passengers and lower energy consumption of the vehicle.

The vehicle will lose less energy (e.g heat will escape at winter time) when the doors for passengers are opened. Less energy loss will result in less battery capacity needed for the vehicles to maintain good climate inside the vehicle at e.g. winter time. In case of e.g. a traditional ICE, it will benefit mainly by better comfort for passengers through less energy losses.

### Reference list

- 100: door device
- 1: closed position
- 2a: first partial open position
- 2b: second partial open position
- 10: door; sliding door
- 10-1: sealing
- 10-2: frame
- 10-3: guiding elements
- 10-4: holding elements, air supply elements
- P: opening direction of the door
- 300: air curtain
- 300H: horizontal blowing air curtain
- 300H': obliquely blowing horizontal air curtain
- H: horizontally oriented air outlet opening
- 300V: vertical blowing air curtain
- 300V': obliquely blowing vertical air curtain
- V: vertically oriented air outlet opening
- V1: air outlet area with air outlet openings displaced relative to the vertically arranged air outlet openings
- 300R: rotating air curtain
- Rn: swivel (number of swivels)
- R1: first swivel
- R2: second swivel
- H1: air outlet area with horizontally arranged air outlet openings
- H2: air outlet area with air outlet openings displaced relative to the horizontally arranged air outlet openings
- H3: air outlet area with air outlet openings displaced relative to the horizontally arranged air outlet openings (opposite to H2)
- 200: door passage

## Claims

1. A door device (100) with at least one door (10) having a sealing (10-1) which seals a doorway (200) in a closed position (1) of the door (10), and the doorway (200) is provided with an air curtain (300) active outside the closed position (1) of the door (10), **wherein** the sealing (10-1) has at least one air outlet opening for blowing out compressed air and at least one air inlet opening for supplying compressed air, wherein the at least one air outlet opening having an air curtain (300H, 300H'; 300R) in the doorway (200) while the compressed air supply is active.

2. A door device (100) according to claim 1, **wherein** the air outlet opening of the sealing is arranged in the sealing region of a sealing (10-1) which seals the doorway (200) opposite a counterpart, so that the at least one air outlet opening for blowing out compressed air is released automatically only after leaving the closed position (1) of the at least one door (10).

3. A door device (100) according to claim 1, **wherein** at least one air supply element (10-4), in particular an upper air supply element (10-4) and a lower air supply element (10-4), are assigned to the at least one door (10), wherein the air supply element has at least one air outlet opening for blowing out compressed air and at least one air inlet opening for supplying compressed air, wherein the at least one air outlet opening forms an air curtain(300V, 300V'; 300R) in the doorway (200) by blowing out the compressed air while the compressed air supply is active.

4. A door device (100) according to claim 1 or 2, **wherein** the at least one air outlet opening of the sealing (10-1) blows out horizontally into the doorway-plane of the doorway (200), through formation of at least one air nozzle horizontally formed in the sealing (10-1), by which a horizontally blowing air curtain (300H) is advantageously formed in the doorway (200).

5. A door device (100) according to claim 1 or 2, **wherein** the at least one air outlet opening of the sealing (10-1) blows out obliquely into the doorway-plane of the doorway (200) through formation of at least one air nozzle in the sealing (10-1), which is tilted relative to an imaginary horizontal axis by a predeterminable outlet angle, by which a obliquely blowing horizontal air curtain (300H') is advantageously formed in the doorway (200).

6. A door device (100) according to claim 1 or 2, **wherein** the at least one air outlet opening of the air supply element (10-4) vertically blows into the doorway-plane of the doorway (200) through formation of at least one air nozzle vertically formed in the air supply element (10-4), by which a vertically blowing air curtain (300V) is advantageously formed in the doorway (200).

7. A door device (100) according to claim 1 or 2, **wherein** the at least one air outlet opening of the air supply element (10-4) blows out obliquely into the doorway (200) through formation of at least one air nozzle in the air supply element (10-4), which is tilted relative to an imaginary vertical axis within the doorway-plane by a predeterminable outlet angle, by which a obliquely blowing vertical air curtain (300V') is advantageously formed in the doorway (200).

8. A door device (100) as claimed in claims 4 and 6, **wherein** the horizontal air curtain (300H) and the vertical air curtain (300V) are combined together, by which an energy-saving air curtain (300H, 300V), which blows out in a cross-flow, is formed in the doorway (200).

9. A door device (100) according to claims 4 to 7, **wherein**
- the obliquely blowing horizontal air curtain (300H') with the vertically blowing air curtain (300V) or
- the obliquely blowing vertical air curtain (300V') with the horizontally blowing air curtain (300H) or
- the obliquely blowing horizontal air curtain (300H') with the obliquely blowing vertical air curtain (300V')
are combined, by which at least one air curtain (300R), which blows out in a rotational flow, is formed in the door passage (200).

10. A door device (100) according to claim 1 to 9, **wherein** at least one air nozzle is arranged in the sealing (10-1) and/or the air supply element (10-4) as the air outlet opening, and is adjustable manually and/or by means of a drive in such a way that the respective at least one air nozzle blows out within the doorway-plane of the doorway (200) in a predeterminable flow direction.

11. A door device (100) according to claim 1 to 10, **wherein** the at least one air nozzle is arranged in the sealing (10-1) and/or the air supply element (10-4), and is adjustable manually and/or by means of a drive in such a way that the respective at least one air nozzle blows out outside the doorway-plane of the doorway (200) in a predeterminable flow direction.

12. A door device (100) according to claims 3 and 11, **wherein** the respective air curtain (300H, 300H'; 300V, 300V'; 300R) due to the adjustment of at least one air nozzle of the upper and lower air supply elements (10-4) (100) relative to the vertical with a flow direction inwards or outwards, which blows outside the doorway-plane of the doorway (220) can be adapted to a summer mode of the door device (100) and a winter mode of the door device (100).

13. A door device (100) according to claims 1 to 12, **wherein** two sliding doors (10) are arranged, each of the sliding doors (10) comprising a sealing (10-1) and each having at least one air outlet opening for blowing out compressed air and at least one air inlet opening for supplying compressed air wherein the air outlet openings form an air curtain (300H, 300H'; 300R) in the doorway (200) between the sliding doors (10) by blowing out the compressed air while the compressed air supply is active, wherein the air outlet openings of the sealings are arranged in the sealing region of the seals which seal the doorway between the sliding doors so that the air outlet openings for blowing out compressed air are only released after leaving the air outlet openings closed position (1) of the sliding doors (10), and the sliding doors (10) have at least one air supply element (10-4), in particular an upper and a lower air supply element, (10-4), which also has at least one air outlet opening for blowing compressed air, and at least one air inlet opening for supplying compressed air, wherein the at least one air outlet form an air curtain (300V, 300V'; 300R) in the doorway (200) by blowing out the compressed air while the compressed air supply is active.

14. Method for operating a door device (100) according to claim 13, **wherein** the sliding doors (10) are brought from a closed position (1) into a first partial open position (2a) and then a complete open position, whereat
- a horizontally blowing or obliquely blowing horizontal air curtain (300H, 300H'; 300R) is switched to active after the sliding doors (10) have left the closed position (1), and
- a vertical blowing or an obliquely blowing vertical air curtain (300V, 300V'; 300R) is switched to active after the sliding doors (10) have reached the first partial open position (2a).

15. Method according to claim 11, **wherein,** after reaching the first partial open position (2a) in the doorway (200) between the sliding doors (10), a blowing air curtain (300H, 300V) in a cross-flow according to claim 8 or at least one in a rotational flow blowing air curtain (300R) with at least one svivel (Rn) according to claim 9 is formed.

16. Method according to claim 15, wherein two svivels (R1, R2) or more svivels (Rn) are formed, which direction of rotation is selected by the orientation of at least one air outlet opening in the sealing (10-1) or the air supply element (10-4) in such a way that the direction of flow in the intersection region of the svivel (Rn) is identical.
